# EUROPEAN PATENT APPLICATION

(11) **EP 4 729 832 A1**
(43) Date of publication of application: **22.04.2026**
(21) Application number: 24823732.3
(22) Date of filing: 13.06.2024
(51) Int. Cl.: F21V 31/00, F21V 23/00, F21K 9/238, F21V 29/74, F21S 41/19, C08L 51/08, C08F 290/06, C08F 220/10, C08K 3/36, C08K 3/08

(54) **LIGHTING DEVICE AND HEAD LAMP**

(30) Priority: 14.06.2023 KR 20230076249
(71) Applicant: LG INNOTEK CO. LTD, Gangseo-gu Seoul 07796 (KR)
(72) Inventor: KWON, Do Youb, Seoul 07796 (KR); LEE, Jun, Seoul 07796 (KR); KIM, Won Jin, Seoul 07796 (KR)
(74) Representative: M. Zardi & Co S.A.
(86) International application number: PCT/KR2024/008140
(87) International publication number: WO 2024/258215

(57) **Abstract**

A lighting device disclosed in an embodiment of the invention comprises: a heat dissipation plate including a recess portion; a circuit board disposed in the recess portion and having a pad; a light source portion disposed on the heat dissipation plate and including a bonding pad and a light emitting device; a connection member connecting the pad of the circuit board and the bonding pad of the light source portion; and a sealing portion disposed on the connection member, wherein the sealing portion comprises a first sealing portion forming an outer perimeter; and a second sealing portion disposed inside the outer perimeter, wherein the first sealing portion and the second sealing portion comprise the same resin composition.

## Description

### [Technical Field]

An embodiment relates to a lighting device and a headlamp having the same.

### [Background Art]

Lighting applications include vehicle lights as well as backlights for displays and signs. Light emitting device, such as light emitting diode (LED), have advantages such as low power consumption, semi-permanent life, fast response speed, safety, and environmental friendliness compared to conventional light sources such as fluorescent lamps and incandescent lamps. These light emitting diodes are applied to various display devices, various lighting devices such as indoor or outdoor lights.

Recently, as a vehicle light source, a lamp employing a light emitting diode has been proposed. Compared with incandescent lamps, light emitting diodes are advantageous in that power consumption is small. However, since an emission angle of light emitted from the light emitting diode is small, when the light emitting diode is used as a vehicle lamp, there is a demand for increasing the light emitting area of the lamp using the light emitting diode. Light emitting diodes can increase the design freedom of lamps because of their small size, and they are also economical because of their semi-permanent lifespan. However, since an exit angle of light emitted from light emitting diode is small, there is a need to increase a light emitting area of a lamp using light emitting diodes when using light emitting diodes as a vehicle lamp. As a background art for a lighting device, Korean Patent Publication No. KR10-2023-0010550 (January 19, 2023) is disclosed.

### [Disclosure]

### [Technical Problem]

An embodiment of the invention provides a lighting device having improved reliability. An embodiment provides a headlamp having a lighting device.

### [Technical Solution]

A lighting device according to an embodiment of an invention comprises: a heat dissipation plate including a recess portion; a circuit board disposed in the recess portion and having a pad; a light source portion disposed on the heat dissipation plate and including a bonding pad and a light emitting device; a connection member connecting the pad of the circuit board and the bonding pad of the light source portion; and a sealing portion disposed on the connection member, wherein the sealing portion includes a first sealing portion forming an outer perimeter; and a second sealing portion disposed inside the outer perimeter, wherein the first sealing portion and the second sealing portion may include the same resin composition.

According to an embodiment of the invention, the resin composition includes a base resin and a filler, the base resin includes an oligomer, a monomer, and a photo-initiator, the oligomer is included in an amount of 45 wt% to 65 wt% based on a total weight of the resin composition, the monomer is included in an amount of 30 wt% to 50 wt% based on the total weight of the resin composition, the photo-initiator is included in an amount of 1 wt% to 5 wt% based on the total weight of the resin composition, and the filler is included in an amount of 2 wt% to 10 wt% based on the total weight of the resin composition. A modulus of the resin composition after curing may be in a range of 100 MPa to 8000 MPa. A thixotropic property of the resin composition before curing may be in a range of 2 to 4. A particle size of the filler may be in a range of 5 µm to 30 µm.

According to an embodiment of the invention, the connection member includes one end connected to the bonding pad of the light source portion; the other end connected to the pad of the circuit board; and a center portion extending from the one end toward the other end, wherein the first sealing portion includes a 1-1 sealing portion disposed close to the one end, a 1-2 sealing portion disposed close to the other end, and a 1-3 sealing portion connecting the 1-1 sealing portion and the 1-2 sealing portion, wherein the 1-1 sealing portion, the 1-2 sealing portion, and the 1-3 sealing portion may be formed integrally.

According to an embodiment of the invention, a maximum height of the second sealing portion may be in a range of more than 1 to 5 times a maximum height of the first sealing portion.

According to an embodiment of the invention, a maximum height of the 1-2 sealing portion may be greater than or equal to a maximum height of the 1-1 sealing portion. The maximum height of the 1-2 sealing portion may be in the range of 1 to 2.5 times a maximum height of the 1-1 sealing portion.

According to an embodiment of the invention, the second sealing portion and the connection member are spaced apart by a first distance, the first distance is defined as a distance between the maximum height of the connection member and the second sealing portion, and the first distance may be in the range of 100 µm to 200 µm.

According to an embodiment of the invention, the 1-1 sealing portion and the light emitting device are spaced apart by a second distance, and the second distance may be in a range of 0.8 mm to 1 mm.

According to an embodiment of the invention, light emitted from the light emitting device forms a first angle with the first sealing portion, light emitted from the light emitting device forms a second angle with the second sealing portion, and at least one of the first angle and the second angle may be 30° or less.

According to an embodiment of the invention, the connection member comprises: one end connected to the bonding pad of the light source portion; the other end connected to the pad of the circuit board; and a center portion extending from the first end toward the other end, the first sealing portion includes a 1-1 sealing portion disposed close to the first end, a 1-2 sealing portion disposed close to the other end, and a 1-3 sealing portion connecting the 1-1 sealing portion and the 1-2 sealing portion, the 1-1 sealing portion includes a 1-1a sealing portion and a 1-1b sealing portion, the 1-1a sealing portion is disposed closer to the first end than the 1-1b sealing portion, the 1-2 sealing portion includes a 1-2a sealing portion and a 1-2b sealing portion, the 1-2a sealing portion is disposed closer to the other end than the 1-2b sealing portion, the 1-1 sealing portion may include a 1-3a sealing portion and a 1-3b sealing portion. According to an embodiment of the invention, the 1-1a sealing portion, the 1-2a sealing portion, and the 1-3a sealing portion form a first outer perimeter, and the 1-1b sealing portion, the 1-2b sealing portion, and the 1-3b sealing portion form a second outer perimeter, and the first outer perimeter and the second outer perimeter may be spaced apart from each other.

According to an embodiment of the invention, the second sealing portion may be disposed inside the first outer perimeter. The height of the first outer perimeter may be greater than or equal to the height of the second outer perimeter.

A headlamp according to an embodiment of the invention includes a housing; and a light source module arranged inside the housing, wherein the light source module may include the lighting device disclosed above.

### [Advantageous Effects]

A lighting device according to an embodiment of the invention includes a sealing portion. The sealing portion protects a connection member connected to a light source portion and may prevent the connection member from being damaged by external impact. This improves the reliability of the lighting device.

The sealing portion includes a first sealing portion and a second sealing portion. The first sealing portion forms an outer perimeter of the sealing portion. The second sealing portion is disposed within the outer perimeter. The first sealing portion and the second sealing portion are formed of a resin composition. The resin composition includes an oligomer, a monomer, a photo-initiator, and a filler. The oligomer, the monomer, the photo-initiator, and the filler are included in a set weight percentage. Accordingly, a thixotropic properties and elasticity of the resin composition may be controlled. Specifically, the resin composition can satisfy the thixotropic properties required by the first sealing portion. In addition, the resin composition can satisfy the elasticity required by the second sealing portion. Accordingly, the first sealing portion and the second sealing portion may be formed using the same resin composition. Furthermore, the first sealing portion and the second sealing portion may be formed using the same process. Accordingly, the process efficiency of forming the sealing portion is improved.

The height of the first sealing portion and the height of the second sealing portion have a set height, and the first sealing portion can protect the surface of the light emitting device and suppress optical interference. The second sealing portion can cover the surface of the connection member and protect the connection member. Accordingly, the reliability of the lighting device may be improved and its size may be reduced.

### [Description of Drawings]

FIG. 1 is a perspective view of a lighting device according to an embodiment, showing a connection member disposed between a light source portion and a circuit board.
FIG. 2 is a side cross-sectional view of the lighting device of FIG. 1 with a sealing portion.
FIG. 3 is a partially enlarged view of the lighting device of FIG. 1, showing the light source portion, the circuit board, and the connection member.
FIG. 4 is a plan view of the lighting device of FIG. 3 with a sealing portion.
FIG. 5 is a plan view of the lighting device of FIG. 3 with multiple sealing portions.
FIG. 6 is a side cross-sectional view illustrating the connection of the light source portion, the connection member, and the heat dissipation plate of the lighting device of FIG. 5.
FIG. 7 is an enlarged view of area A of FIG. 6.
FIG. 8 is a photograph of the light source portion, the connection member, and the heat dissipation plate of the lighting device according to an embodiment.
FIG. 9 is a drawing illustrating the thickness ratio of the sealing portion in area A-A' of FIG. 9.
FIG. 10 is another plan view of the lighting device of FIG. 3.
FIG. 11 is a cross-sectional side view illustrating the connection of the light source, connection member, and heat dissipation plate of the lighting device of FIG. 10.
FIG. 12 is an enlarged view of area B of FIG. 11.
FIG. 13 is a perspective view of a headlamp to which a lighting device according to an embodiment is applied.

### [Best Mode]

Hereinafter, preferred embodiments of the invention will be described in detail with reference to the accompanying drawings. The technical idea of the present invention is not limited to some of the described embodiments, but may be implemented in various different forms, and if it is within the scope of the technical idea of the present invention, one or more of its components may be selectively combined and substituted between embodiments. In addition, terms (including technical and scientific terms) used in the embodiments of the present invention, unless explicitly specifically defined and described, may be interpreted as a meaning that may be generally understood by those skilled in the art to which the present invention belongs, and terms generally used, such as terms defined in the dictionary, may be interpreted in consideration of the context of the related technology.

Terms used in the embodiments of the present invention are for describing the embodiments and are not intended to limit the present invention. In the present specification, the singular form may include a plural form unless specifically described in the phrase, and may include at least one of all combinations that may be combined as A, B, and C when described as "A and/or at least one (or more than one) of B and C". Also, terms such as first, second, A, B, (a), and (b) may be used to describe components of an embodiment of the present invention. These terms are intended only to distinguish the components from other components and are not determined by their nature, sequence, or order.

Also, when a component is described as being 'connected', 'coupled' or 'connected' to another component, not only when the component is directly connected, coupled or connected to another component, it may also be 'connected', 'coupled', or 'connected' due to another component between that component and the other component.

In addition, when each component is described as being formed or disposed "up (above) or down (bottom)", the up (down) or down (bottom) includes not only when two components are in direct contact with each other, but also when one or more components are formed or disposed between two components. Also, when expressed as "up (above) or down (bottom)", it may include the meaning of not only the upward direction but also the downward direction based on one component.

Hereinafter, a lighting device according to an embodiment will be described with reference to the drawings.

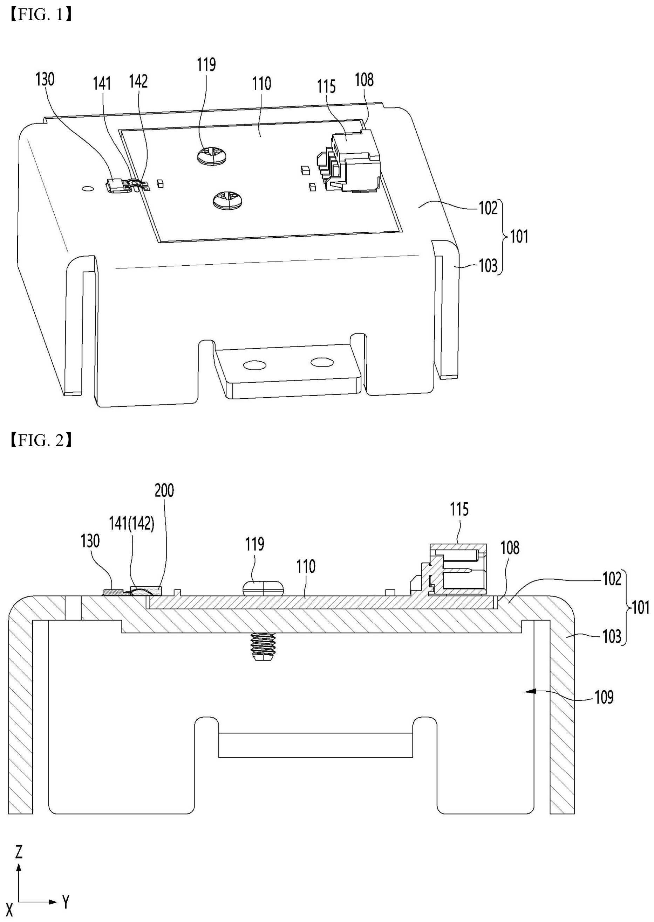

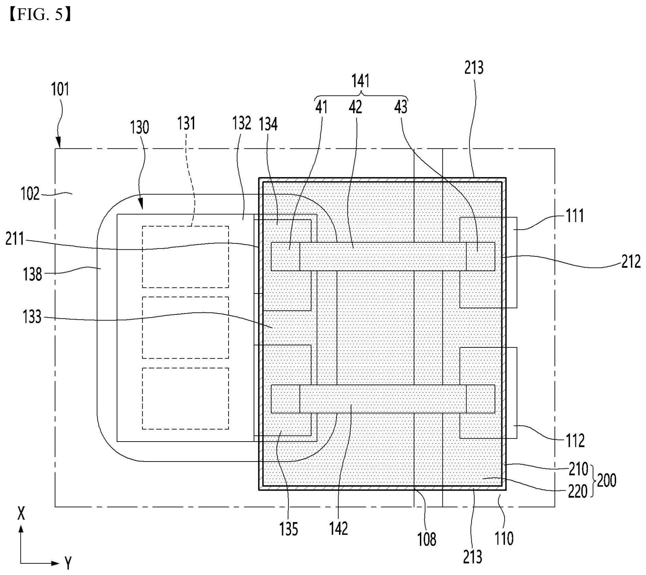

Referring to FIGS. 1 to 9, the lighting device according to the embodiment may include a heat dissipation plate 101, a circuit board 110 disposed on the heat dissipation plate 101, a light source portion 130 disposed on the heat dissipation plate 101 and including a light emitting device 131, connection members 141 and 142 connecting the light source portion 130 and the circuit board 110, and a sealing portion 200 sealing the connection members 141 and 142.

The lighting device is applicable to various lamp devices requiring illumination. For example, the lighting device may be applied to vehicle lamps, household lighting devices, and industrial lighting devices. For example, the lighting device may be applied to the vehicle lamp. The lighting device may be applied to headlamps, side mirrors, side marker lights, fog lights, tail lights, brake lights, daytime running lights, vehicle interior lighting, door scars, rear combination lamps, and backup lamps. The lighting device can also be applied to indoor or outdoor advertising devices, display devices, and electric vehicles.

The heat dissipation plate 101 supports a circuit board 110. Heat generated from the circuit board 110 may be dissipated by the heat dissipation plate 101. The heat dissipation plate 101 comprises metal. For example, the heat dissipation plate 101 may be formed as a laminated structure of multiple metal layers. The heat dissipation plate 101 may be formed as a single layer or multiple layers. The heat dissipation plate 101 may comprise a ceramic material, AlN, or aluminum with an anodized surface layer. The metal layer may include at least one of Al, Ni, Mo, Cu, Cu-alloy, Cu-W, Ag, or Au. The heat dissipation plate 101 includes a heat dissipation portion 102 and a side portion 103. The heat dissipation portion 102 includes a recess portion 108. The circuit board 110 is disposed in the recess portion 108. An area of the heat dissipation portion 102 may be larger than an area of the circuit board 110. The side portion 103 is bent backward from an edge of the heat dissipation portion 102. One or more side portions 103 may be disposed along the outer side of the heat dissipation portion 102. An empty space 109 may be provided on the inner side of the side portion 103 and the lower side of the heat dissipation portion 102, or other structures may be combined therewith. The heat dissipation plate 101 may be a support plate.

The recess portion 108 is formed at a predetermined depth on the upper surface of the heat dissipation portion 102 of the heat dissipation plate 101. The depth of the recess portion 108 may be equal to or different from the thickness of the circuit board 110. For example, the depth of the recess portion 108 may be smaller than the thickness of the circuit board 110. The top-view shape of the recess portion 108 may be identical to the top-view shape of the circuit board 110. For example, the top-view shape of the recess portion 108 may include a polygonal shape.

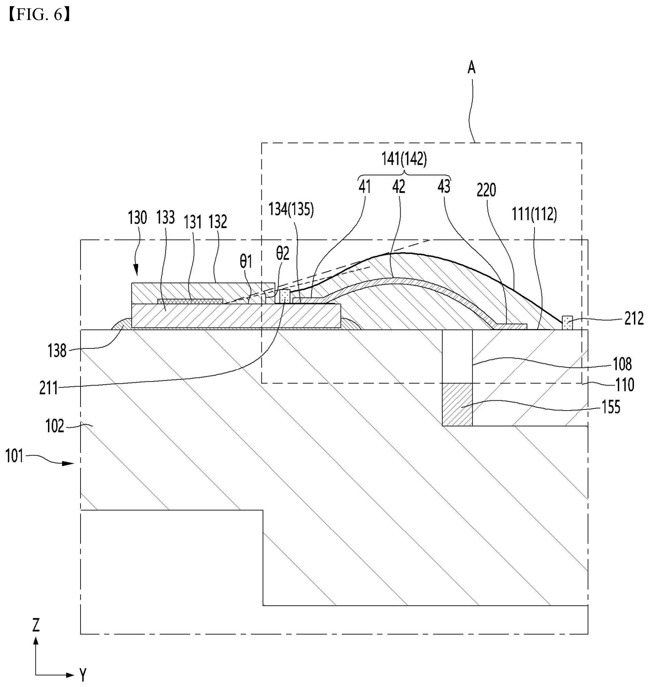

The circuit board 110 is inserted into the recess portion 108. The circuit board 110 and the bottom surface of the recess portion 108 may be bonded by an adhesive member 155. The adhesive member 155 may include a thermally conductive adhesive. The upper surface of the circuit board 110 may be arranged on the same plane as the upper surface of the heat dissipation plate 101. As another example, the upper surface of the circuit board 110 may be arranged higher than the upper surface of the heat dissipation plate 101. As shown in FIG. 6, the adhesive member 155 is disposed around the outer periphery of the recess portion 108. Accordingly, the surface of the heat dissipation portion 102 may be adhered to the circuit board 110.

The circuit board 110 may include a resin material or a metal material. For example, the circuit board 110 may include any one of a ceramic-based PCB, an MCPCB (Metal Core PCB), a flexible PCB (FPCB), and a resin-based PCB. The circuit board 110 may include a metal layer on the lower portion, a circuit layer having a pad on the upper portion, a protective layer made of an insulating material for protecting the upper circuit layer, and an insulating layer between the metal layer and the circuit layer. The circuit board 110 may be provided as an MCPCB having a metal layer on the lower portion. In addition, the circuit board 110 may transfer heat to the heat dissipation plate 101.

The circuit board 110 may be fastened to the heat dissipation portion 102 by a fastening means 119. The fastening means 119 may include one or more screws. The circuit board 110 and the heat dissipation portion 102 may be fastened and tightly joined by the screws. When the circuit board 110 is fixed by the fastening means 119, the adhesive member 155 may be removed. Accordingly, the circuit board 110 may be easily separated.

The circuit board 110 may include a plurality of pads. The pads 111 and 112 may include a first pad 111 and a second pad 112 that are spaced apart from each other. The first pad 111 and the second pad 112 may be connected to a connector 115 disposed on an upper portion of the circuit board 110 by a circuit layer of the circuit board 110. The connector 115 may receive a driving signal and power from the outside. The pads 111 and 112 and the connector 115 may be disposed on both edges of the circuit board 110. The fastening means 119 may be disposed in an area between the pads 111 and 112 and the connector 115. The first pad 111 and the second pad 112 are disposed adjacent to one side of the circuit board 110. The pads 111 and 112 may be selected from Ti, Ru, Rh, Ir, Mg, Zn, Al, In, Ta, Pd, Co, Ni, Si, Ge, Ag, Au, and optional alloys thereof.

The light source portion 130 may be disposed on the heat dissipation portion 102. The light source portion 130 may be adjacent to the recess portion 108. The light source portion 130 may be adjacent to one side of the circuit board 110. One side of the circuit board 110 may be disposed between the pads 111 and 112 and the light source portion 130. The light source portion 130 may include a support member 133 and at least one light emitting device 131 disposed on the support member 133. A plurality of light emitting devices 131 may be sealed by a resin member 132. The support member 133 may include a ceramic substrate or a semiconductor substrate. The support member 133 may support the plurality of light emitting devices 131. In addition, the support member 133 may include a conductive pattern. The plurality of light emitting devices 131 may be electrically connected by the conductive pattern. The support member 133 may electrically connect each of the plurality of light emitting devices 131 to bonding pads 134 and 135. The anode terminal and the cathode terminal of each of the plurality of light emitting devices 131 may be electrically connected to the first and second bonding pads 134 and 135.

A protection element (not shown) may be disposed on the support member 133 to protect the light emitting devices 131. The protective element may be implemented as a thyristor, a Zener diode, or a transient voltage suppression (TVS). This protects the light emitting device 131 from electrostatic discharge (ESD). The support member 133 may be formed of a ceramic material or a MCPCB material. The light source portion 130 may transfer heat generated from the light emitting devices 131 to the heat dissipation plate 101 via the support member 133. The support member 133 and the heat dissipation plate 101 may be bonded using an adhesive. The adhesive 138 may include a thermally conductive adhesive containing metal powder or inorganic powder within a resin material. For example, the adhesive 138 may include a thermal interface material (TIM).

The adhesive 138 may be disposed along the lower surface and a lower portion of side surfaces of the support member 133. The adhesive 138 is disposed on the outer side of the support member 133 and may contact each side of the support member 133.

The light emitting devices 131 are arranged in a plurality of directions or in at least one row. The plurality of light emitting devices 131 may be connected in series. The plurality of light emitting devices 131 may include at least one blue, green, or red LED chip. The plurality of light emitting devices 131 may be flip-chip or wire-bonded. The light emitting device 131 may include a plurality of semiconductor layers composed of compound semiconductors of Group II and Group VI elements and/or compound semiconductors of Group III and Group V elements. At least one or all of the plurality of semiconductor layers may include a compound semiconductor of a series such as AlInGaN, InGaN, AlGaN, GaN, GaAs, InGaP, AllnGaP, InP, or InGaAs.

The resin member 132 may include silicone or epoxy. The resin member 132 may include a transparent layer and/or a phosphor layer (not shown) on the light emitting device 131. A reflective wall (not shown) may be included around the transparent layer and/or phosphor layer. The resin member 132 may further include a convex lens (not shown). The phosphor layer may include at least one or two or more of a yellow phosphor, a green phosphor, a blue phosphor, and a red phosphor. When the phosphor layer is disposed on the light emitting device 131, the phosphor layer may be exposed to the upper surface of the light source portion 130. The light source portion 130 may emit white light.

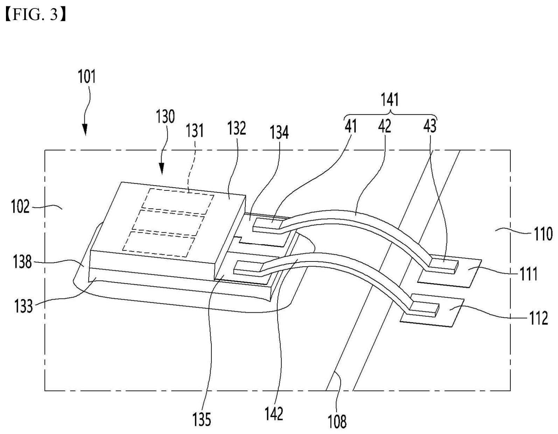

Referring to FIGS. 3 to 5, the light emitting device 131 is disposed on an upper portion of one side of the support member 133. Bonding pads 134 and 135 are exposed on the upper side of the other side of the support member 133. The bonding pads 134 and 135 may include a first bonding pad 134 connected to the cathodes of the plurality of light emitting devices 131 and a second bonding pad 135 connected to the anodes of the plurality of light emitting devices 131. The first bonding pad 134 may have a color-coded mark and function as a cathode terminal, and the second bonding pad 135 may function as an anode terminal. The first bonding pad 134 and the second bonding pad 135 may be selected from Ti, Ru, Rh, Ir, Mg, Zn, Al, In, Ta, Pd, Co, Ni, Si, Ge, Ag, Au, and optional alloys thereof.

The first bonding pad 134 and the first pad 111 are connected by a first connection member 141, and the second bonding pad 135 and the second pad 112 are connected by a second connection member 142. The first connection member 141 and the second connection member 142 may be formed of a wire. The first connection member 141 and the second connection member 142 may include at least one of Au, Al, Ag, and Ni. The first connection member 141 and the second connection member 142 have one end 41 bonded to the first bonding pad 134 and the second bonding pad 135, respectively, and the other end 43 bonded to the first pad 111 and the second pad 112, respectively. The first connection member 141 and the second connection member 142 include a center portion 42 extending from one end 41 toward the other end 43. The center portion 42 may extend from the other end of the light source portion 130 to one side of the circuit board 110. The center portion 42 may extend onto the recess portion 108 between the circuit board 110 and the heat dissipation portion 102. The height of the one end 41 may be higher than the height of the other end 43. The height of the center portion 42 may be higher than the one end 41.

The light source portion 310 and the circuit board 110 are electrically connected by the first connection member 141 and the second connection member 142. The connection members 141 and 142 include wires having a width greater than their thickness, i.e., ribbon-shaped wires. Therefore, the connection members 141 and 142 may be damaged by external impact. Furthermore, if the connection members 141 and 142 are exposed to the outside, it may react with substances in the air and become corroded. Consequently, the electrical connection characteristics between the light source portion 310 and the circuit board 110 may deteriorate. To prevent the above-described problems, the lighting device according to the embodiment includes a sealing portion.

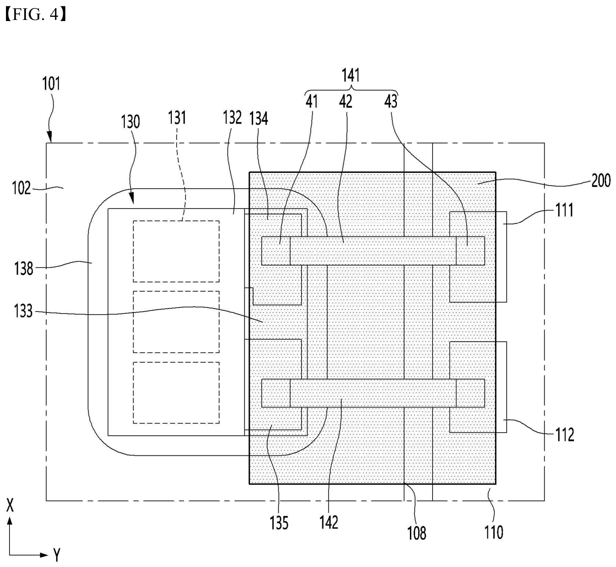

Referring to FIGS. 4 to 7, the lighting device according to the embodiment includes the sealing portion 200. The sealing portion 200 is disposed on the connection members 141 and 142. The sealing portion 200 surrounds the connection members 141 and 142. The sealing portion 200 includes a resin composition. In detail, the sealing portion 200 includes a base resin and a plurality of fillers disposed within the base resin. The base resin may include an acrylic resin. The base resin may include a photocurable resin. The base resin may include an oligomer, a monomer, and a photo-initiator. The resin composition may be cured by a reaction of the oligomer, the monomer, and the photo-initiator. The oligomer may include a urethane acrylate, and the additive monomer may include an acrylate. In addition, the photo-initiator may include a known photo-initiator for UV curing. The filler is disposed within the base resin. The filler is dispersed within the base resin. The filler may include particles having a spherical or (nano)wire shape. The particle diameter of the filler may be 5 µm or more. In detail, the particle diameter of the filler may be 5 µm to 30 µm. The filler may include a metal or a non-metal. For example, the filler may include aluminum (Al) or silica (Si). The oligomer, monomer, and filler may be included in a set weight percentage relative to the total weight percentage of the resin composition.

The weights of the oligomer, monomer, and filler are related to the thixotropic property (TI), elasticity, viscosity, and adhesive strength of the resin composition. Specifically, the thixotropic property of the resin composition before curing and the elasticity and viscosity of the resin composition after curing may vary depending on the weight range of the oligomer, monomer, and filler. The oligomer may be included in an amount of at least 40 wt% relative to the total weight (100 wt%) of the resin composition. Specifically, the oligomer may be included in an amount of from 45 wt% to 65 wt% relative to the total weight percentage of the resin composition. Since the oligomer is included in the above weight percentage range, the viscosity of the resin composition after curing may be reduced and the elasticity may be increased. The monomer may be included in an amount of at least 30 wt% relative to the total weight percentage of the resin composition. Specifically, the monomer may be included in an amount of 30 to 50 wt% based on the total weight of the resin composition. Since the monomer is included in the above weight percent range, the viscosity of the resin composition after curing is reduced. Furthermore, the adhesion between the sealing portion and the heat dissipation plate 101 and the circuit board 110 is increased.

The filler may be included in an amount of at least 1 wt% based on the total weight of the resin composition. Specifically, the filler may be included in an amount of at least 2 to 10 wt% based on the total weight of the resin composition. Since the filler is included in the above weight percent range, the thixotropic nature of the resin composition before curing is increased. This facilitates the manufacturing process of the sealing portion. Furthermore, the viscosity of the resin composition after curing is reduced.

The photo-initiator may be included in an amount of at least 1 wt% based on the total weight of the resin composition. Specifically, the photo-initiator may be included in an amount of at least 1 wt% based on the total weight of the resin composition. The properties of the resin composition are controlled by the weight ratios of the oligomer, monomer, filler, and photo-initiator.

In detail, the thixotropic property of the resin composition before curing is controlled. Specifically, the thixotropic property of the resin composition before curing may be 2 to 4. Since the thixotropic property satisfies the above range, the sealing portion may be easily formed. This will be described in detail below. The elasticity of the resin composition after curing is controlled. Specifically, the modulus of the resin composition after curing may be 100 MPa or greater. More specifically, the modulus of the resin composition after curing may be 100 MPa to 8000 MPa. This prevents the sealing portion from being damaged by external impact.

Referring to FIG. 4, the sealing portion 200 includes a first sealing portion 210 and a second sealing portion 220. The first sealing portion 210 is disposed at an edge of the sealing portion 200. The first sealing portion 210 may form an outer perimeter of the sealing portion 200. The sealing portion 200 may form an inner region in which the second sealing portion 220 is disposed by the first sealing portion 210. The first sealing portion 210 is divided into a 1-1 sealing portion 211, a 1-2 sealing portion 212, and a 1-3 sealing portion 213 according to location.

The 1-1 sealing portion 211 is disposed close to the light source portion 130. The 1-1 sealing portion 211 is disposed close to the end 41. The 1-2 sealing portion 212 is disposed close to the circuit board 110. The 1-2 sealing portion 213 is positioned close to the other end 43. The 1-3 sealing portion 213 connects the 1-1 sealing portion 211 and the 1-2 sealing portion 212. The 1-1 sealing portion 211, the 1-2 sealing portion 212, and the 1-3 sealing portion 213 are distinguished by their positions and are formed integrally. The 1-1 sealing portion 211, the 1-2 sealing portion 212, and the 1-3 sealing portion 213 form an outer perimeter of the sealing portion 200. Accordingly, the first sealing portion 210 can function as a dam of the sealing portion 200.

The first sealing portion 210 includes the resin composition. Specifically, the first sealing portion 210 is formed by curing the resin composition. The resin composition has the physical properties described above. Specifically, the resin composition has a thixotropic property within a set range. Accordingly, the flowability of the first sealing portion 210 may be controlled before curing the first sealing portion. Accordingly, after the second sealing portion 220 is disposed inside the first sealing portion 210, the first sealing portion 210 and the second sealing portion 220 may be cured simultaneously. In addition, the material of the first sealing portion 210 and the material of the second sealing portion 220 may be used as the same material. Therefore, the process efficiency of forming the sealing portion 200 may be improved.

If the thixotropy of the resin composition is 2 or less, when the second sealing portion 220 is disposed inside the first sealing portion 210, the first sealing portion 210 may be pushed outward. Consequently, the first sealing portion 210 may have difficulty functioning as a dam. Consequently, a separate curing process is required for the first sealing portion 210. Alternatively, a process for increasing the height of the first sealing portion 210 is required. Consequently, the efficiency of the process for forming the sealing portion 200 may be reduced. Furthermore, if the thixotropy of the resin composition exceeds 4, the viscosity and modulus of the cured resin composition may change. Consequently, the sealing portion 200 may be damaged by external impact.

The second sealing portion 220 is disposed inside the sealing portion 200. In detail, the second sealing portion 220 is disposed in the inner region of the first sealing portion 210. The first sealing portion 210 forms an outer perimeter of the sealing portion 200. The second sealing portion 220 is disposed inside the outer perimeter. The second sealing portion 220 may be a protective layer that protects the connection members 141 and 142. The second sealing portion 220 is disposed to surround the connection members 141 and 142. This prevents the connection members 141 and 142 from being damaged by external impact. The second sealing portion 220 includes the resin composition. In detail, the second sealing portion 220 is formed by curing the resin composition. In detail, the resin composition forming the second sealing portion 220 is identical to the resin composition forming the first sealing portion 210.

The resin composition has the physical properties described above. In detail, the resin composition has a viscosity and modulus within a set range. In detail, the modulus of the second sealing portion 220 formed by curing the resin composition may be 100 MPa to 8000 MPa. Accordingly, the elasticity of the second sealing portion may be controlled. Accordingly, the connection members 141 and 142 may protected by the sealing portion 200. That is, since the sealing portion 200 is protected from external impact, the connection members 141 and 142 may be easily protected by the sealing portion 200. The first sealing portion 210 and the second sealing portion 220 are formed of the same resin composition. Specifically, the resin composition has a thixotropic property, viscosity, and modulus within a set range. Accordingly, the resin composition can satisfy both the physical properties required by the first sealing portion 210 and the physical properties required by the second sealing portion 220. Specifically, the resin composition satisfies the thixotropic property required by the first sealing portion 210. Furthermore, the resin composition satisfies the modulus required by the second sealing portion 220.

Accordingly, the first sealing portion 210 and the second sealing portion 220 may be formed using the same resin composition in the same process. For example, the first sealing portion 210 is applied to form the outer perimeter of the sealing portion 200. Subsequently, the second sealing portion 220 is applied to the inside of the outer perimeter. Next, the first sealing portion 210 and the second sealing portion 220 may be cured simultaneously. Therefore, the process time for forming the sealing portion 200 is shortened. Consequently, process efficiency is improved.

The first sealing portion 210 and the second sealing portion 220 may have set heights relative to the upper surface of the circuit board 110 or the upper surface of the heat dissipation plate 101. The height of the first sealing portion 210 may be defined by the thickness of the first sealing portion 210. Furthermore, the height of the second sealing portion 220 may be defined by the thickness of the second sealing portion 220. The height H2 of the first sealing portion 210 and the height H2 of the second sealing portion 220 may differ. In detail, the height H2 of the second sealing portion 220 based on the upper surface of the circuit board 110 or the upper surface of the heat dissipation plate 101 is greater than the height of the first sealing portion 210. In detail, the maximum height of the second sealing portion 220 is greater than the maximum height of the first sealing portion 210. The height H2 of the second sealing portion may be 2, 3, or 4 times or more the height of the first sealing portion 210. In detail, the height H2 of the second sealing portion 220 may be 1 to 5 times the height of the first sealing portion 210.

If the height H2 of the second sealing portion is 1 or less than the height of the first sealing portion, the second sealing portion 220 may not completely surround the connection member 141 and 142. By this, the connection members 141 and 142 may be exposed to the outside of the sealing portion 200. Alternatively, if the height H2 of the second sealing portion 220 is less than or equal to one time the height of the first sealing portion 210, the distance between the connection members 141 and 142 and the second sealing portion 220 may be reduced. By this, an external impact may be transmitted to the connection members 141 and 142. By this, the connection members 141 and 142 may be damaged by the external impact. The height H1-1 of the 1-1 sealing portion and the height H1-2 of the 1-2 sealing portion may be the same or different. For example, the height H1-2 of the 1-2 sealing portion may be greater than or equal to the height H1-1 of the 1-1 sealing portion. That is, the height H1-2 of the 1-2 sealing portion may be the same as or greater than the height H1-1 of the 1-1 sealing portion. In detail, the height H1-2 of the 1-2 sealing portion may be 1 to 1.5 times, 1 to 2 times, or 1 to 2.5 times the height H1-1 of the 1-1 sealing portion. When the height H1-1 of the 1-1 sealing portion and the height H1-2 of the 1-2 sealing portion are formed to be the same or similar, the process of forming the first sealing portion 210 may be facilitated. When the height H1-2 of the 1-2 sealing portion is made greater than the height H1-1 of the 1-1 sealing portion, the height deviation of the second sealing portion is reduced. The 1-1 sealing portion 211 is disposed higher than the 1-2 sealing portion 212. Accordingly, the second sealing portion 220 may have a step formed in the outer region. Since the height H1-2 of the 1-2 sealing portion is disposed to be greater than the height H1-1 of the 1-1 sealing portion, the height difference of the second sealing portion 220 may be reduced.

The second sealing portion 220 and the connection members 141 and 142 may be spaced apart from each other. The distance between the second sealing portion 220 and the connection members 141 and 142 may be defined as a first distance G1. The first distance G1 is defined as a distance of a height direction of the second sealing portion 220. The first distance G1 may be defined as a distance between the high points of the connection members 141 and 142 and the high point of the second sealing portion 220. The first distance G1 may be 100 µm or more. In detail, the first distance G1 may be 100 µm to 200 µm, 120 µm to 180 µm, or 140 µm to 160 µm. If the first distance G1 is less than 100 µm, the amount of sealing portion disposed between the second sealing portion 220 and the connection member 141 and 142 becomes small. Accordingly, an external impact may pass through the second sealing portion 220 and be transmitted to the connection member 141 and 142. Accordingly, the reliability of the lighting device may be reduced. If the first distance G1 exceeds 200 µm, the height of the second sealing portion 220 increases. Accordingly, the thickness of the lighting device may be thickened by the second sealing portion 220.

The 1-1 sealing portion 211 and the light emitting device 131 may be spaced apart from each other. The distance between the 1-1 sealing portion 211 and the light emitting device 131 may be defined as a second distance G2. It is defined as a distance in the longitudinal direction of the connection members 141 and 142. The second distance G2 may be 0.8 mm or more. In detail, the second distance G2 may be 0.8 mm to 1 mm. When the second distance G2 is less than 0.8 mm, the 1-1 sealing portion 211 may also be placed in an area where the light emitting device 131 is placed during the process of forming the sealing portion. In addition, when the second distance G2 exceeds 1 mm, the distance between the light emitting device 131 and the bonding pads 134 and 135 may increase. Accordingly, the size of the light source portion 130 may be increased. Accordingly, the size of the lighting device may be increased.

The height of the first sealing portion 210 and the height H2 of the second sealing portion 220 are limited by the light beam angle of the light emitting device 131. Specifically, the light beam angle of the light emitting device 131 may be 120° or more. Accordingly, the first angle θ1 formed between the light emitted from the light emitting device 131 and the first sealing portion 210 may be 30° or less. In addition, the second angle θ2 formed between the light emitted from the light emitting device 131 and the second sealing portion 220 may be 30° or less. Accordingly, the Lambertian emission of the light emitting device 131 is not interfered with by the sealing portion 200. Accordingly, the brightness and luminous efficiency of the lighting device may be improved.

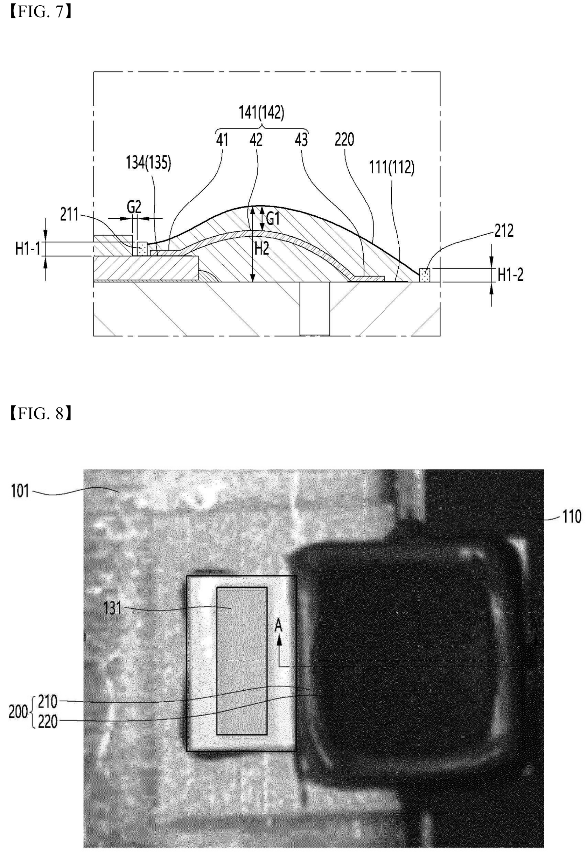

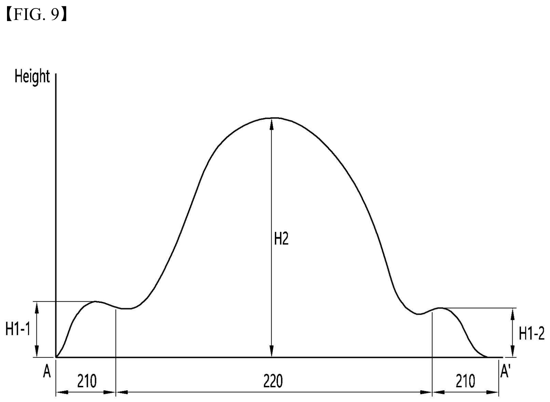

FIGS. 8 and 9 are drawings illustrating a sealing portion and a thickness profile of the sealing portion of a lighting device according to an embodiment.

Referring to FIGS. 8 and 9, the sealing portion 200 includes a first sealing portion 210 and a second sealing portion 220. The first sealing portion 210 and the second sealing portion 220 are formed from the same resin composition. However, the first sealing portion 210 and the second sealing portion 220 are applied in different orders. Furthermore, the first sealing portion 210 and the second sealing portion 220 are disposed at different heights. Therefore, they are distinguished by the boundary between the first sealing portion 210 and the second sealing portion 220.

Referring to FIG. 9, the maximum height H2 of the second sealing portion 220 is greater than the heights H1-1 and H1-2 of the first sealing portion 210. Specifically, the height of the second sealing portion 220 in contact with the first sealing portion 210 is smaller than the height of the first sealing portion 210. However, the height of the second sealing portion 220 gradually increases and becomes greater than the height of the first sealing portion 210. The second sealing portion 220 is disposed in a shape that gradually increases and then decreases.

The first sealing portion 210 is formed by the resin composition. Accordingly, the first sealing portion has thixotropic properties within a set range before curing. Therefore, when filling the second sealing portion, the first sealing portion does not collapse. Therefore, the second sealing portion does not overflow outside the first sealing portion. Accordingly, the second sealing portion is not disposed outside the first sealing portion.

The lighting device according to the embodiment includes a sealing portion 200.

The sealing portion 200 protects the connection members 141 and 142. Accordingly, the connection members 141 and 142 may be prevented from being damaged by external impact. This improves the reliability of the lighting device. The sealing portion 200 includes a first sealing portion 210 and a second sealing portion 220. The first sealing portion 210 forms the outer perimeter of the sealing portion 200. The second sealing portion 220 is disposed inside the outer perimeter.

The first sealing portion 210 and the second sealing portion 220 are formed of the resin composition. The resin composition includes an oligomer, a monomer, a photo-initiator, and a filler. The oligomer, the monomer, the photo-initiator, and the filler are included in a set weight %. Accordingly, the thixotropic properties and elasticity of the resin composition may be controlled. Specifically, the resin composition can satisfy the thixotropic properties required by the first sealing portion 210. In addition, the resin composition can satisfy the elasticity required by the second sealing portion 220. Therefore, the first sealing portion 210 and the second sealing portion 220 may be formed using the same resin composition.

In addition, the first sealing portion 210 and the second sealing portion 220 may be formed using the same process. Accordingly, the process efficiency of forming the sealing portion 200 is improved. In addition, the height of the first sealing portion 320 and the height of the second sealing portion 220 have a set size based on the upper surface of the circuit board 110 or the upper surface of the heat dissipation plate 101. Additionally, the first sealing portion 210 and the light emitting device 131 may be spaced apart by a set distance, and the second sealing portion 220 may have a distance to protect the surfaces of the connection members 141 and 142. Accordingly, the reliability of the lighting device may be improved and its size may be reduced.

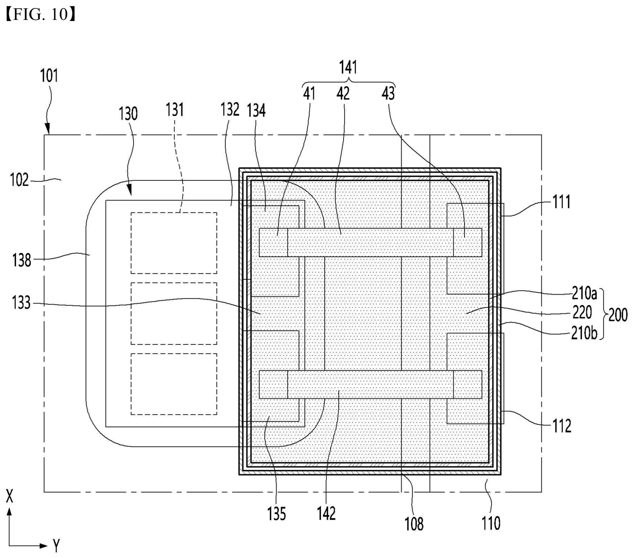

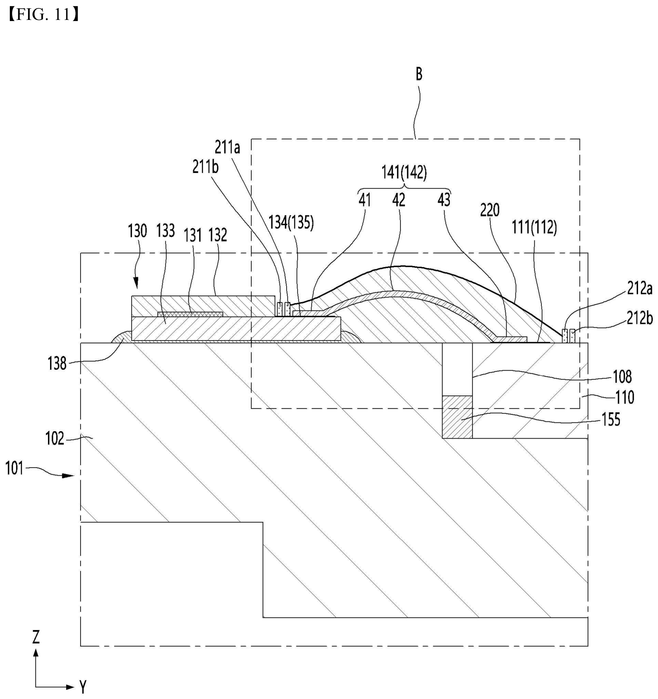

Hereinafter, a lighting device according to another embodiment will be described with reference to FIGS. 10 to 12. Descriptions of the same elements as those described in the lighting device according to the previously described embodiment will be omitted. Furthermore, identical components are designated by the same reference numerals.

Referring to FIGS. 10 to 12, the lighting device includes the sealing portion 200. The sealing portion 200 includes a first sealing portion 210 and a second sealing portion 220. The first sealing portion 210 is divided into a 1-1 sealing portion 211, a 1-2 sealing portion 212, and a third-first sealing portion 213 according to their positions. The 1-1 sealing portion 211 is positioned close to the light source portion 130. The 1-1 sealing portion 211 is positioned close to the first end 41. The 1-2 sealing portion 212 is positioned close to the circuit board 110. The 1-2 sealing portion 213 is positioned close to the other end 43.

The 1-3 sealing portion 213 connects the 1-1 sealing portion 211 and the 1-2 sealing portion 212. The 1-1 sealing portion 211, the 1-2 sealing portion 212, and the 1-3 sealing portion 213 are distinguished by their positions and are formed integrally. The 1-1 sealing portion 211, the 1-2 sealing portion 212, and the 1-3 sealing portion 213 form an outer perimeter of the sealing portion 200. Accordingly, the first sealing portion 210 can serve as a dam of the sealing portion 200. The 1-1 sealing portion 211, the 1-2 sealing portion 212, and the 1-3 sealing portion 213 may each include two sealing portions. For example, the 1-1 sealing portion 211 may include the 1-1a sealing portion 211a and the 1-1b sealing portion 211b. The 1-1a sealing portion 211a is positioned inwardly relative to the 1-1b sealing portion 211b. Specifically, the 1-1a sealing portion 211a is positioned closer to the end 41 than the 1-1b sealing portion 211b. Specifically, the 1-1b sealing portion 211b is positioned closer to the light source portion 130 than the 1-1a sealing portion 211a.

Specifically, the 1-2 sealing portion 212 may include the 1-2a sealing portion 212a and the 1-2b sealing portion 221b. The 1-2a sealing portion 212a is positioned inwardly relative to the 1-2b sealing portion 212b. Specifically, the 1-2a sealing portion 212a is positioned closer to the other end 43 than the 1-2b sealing portion 212b.

The 1-3 sealing portion 213 may include the 1-3a sealing portion and the 1-3b sealing portion. The 1-3a sealing portion 213a is positioned inward from the 1-3b sealing portion 213b.

The 1-1a sealing portion 211a, the 1-2a sealing portion 212a, and the 1-3a sealing portion are connected. The 1-1a sealing portion 211a, the 1-2a sealing portion 212a, and the 1-3a sealing portion 213a are formed integrally. The first sealing portion 210 forms a first outer perimeter by the 1-1a sealing portion 211a, the 1-2a sealing portion 212a, and the 1-3a sealing portion 213a.

The 1-1b sealing portion 211b, the 1-2b sealing portion 212b, and the 1-3b sealing portion are connected. The 1-1b sealing portion 211b, the 1-2b sealing portion 212b, and the 1-3b sealing portion 213b are formed integrally. The first sealing portion 210 forms a second outer perimeter by the 1-1b sealing portion 211b, the 1-2b sealing portion 212b, and the 1-3b sealing portion 213b. The first outer perimeter and the second outer perimeter are spaced apart. The first outer perimeter is positioned inward relative to the second outer perimeter. That is, the first outer perimeter is positioned closer to one end 41 and the other end 43 of the connection member 141 and 142 than the second outer perimeter.

The second sealing portion 220 is positioned inside the first outer perimeter. The first outer perimeter prevents the second sealing portion 220 from overflowing outside the first sealing portion 210. The second outer perimeter further prevents the second sealing portion 220 from overflowing. When applying the second sealing portion 220, an error in the amount of the resin composition applied may occur. As a result, the second sealing portion 220 may overflow outside the first outer perimeter. The resin composition overflowing outside the first outer perimeter is prevented from flowing outside the first sealing portion 210 by the second outer perimeter. Accordingly, the resin composition may be prevented from flowing into the light source portion 130 during the process.

The height of the 1-1a sealing portion 211a may be the same as the height of the 1-1b sealing portion 211b. The height of the 1-2a sealing portion 212a may be the same as the height of the 1-2b sealing portion 211b. The height of the 1-3a sealing portion 213a may be the same as the height of the 1-3b sealing portion 213b. As another example, the height of the 1-1a sealing portion 211a may be different from the height of the 1-1b sealing portion 211b. In detail, the height of the 1-1a sealing portion 211a may be greater than the height of the 1-1b sealing portion 211b. The height of the 1-2a sealing portion 212a may be different from the height of the 1-2b sealing portion 211b. In detail, the height of the 1-2a sealing portion 212a may be greater than the height of the 1-2b sealing portion 211b. The height of the 1-3a sealing portion 213a may be different from the height of the 1-3b sealing portion 213b. In detail, the height of the 1-3a sealing portion 213a may be greater than the height of the 1-3b sealing portion 213a. That is, the height of the first outer perimeter may be greater than the height of the second outer perimeter.

The first outer perimeter acts as a main dam. In addition, the second outer perimeter acts as an auxiliary dam. Accordingly, the height of the first outer perimeter is increased to prevent overflow of the second sealing portion 220. In addition, the height of the second outer perimeter is relatively decreased. As a result, overflow of the second sealing portion 220 is further prevented. Additionally, the size of the sealing portion may be reduced. A lighting device according to another embodiment includes multiple outer perimeters. Accordingly, overflow of the second sealing portion 220 caused by an error in the amount applied during the process may be prevented. Therefore, the reliability of the lighting device according to another embodiment may be improved.

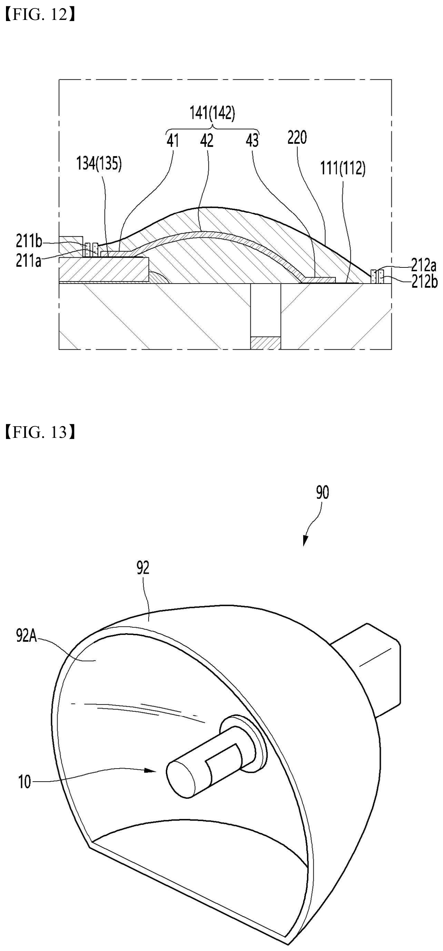

Referring to FIG. 13, a vehicle headlamp 90 having a lighting device according to an embodiment includes a light source module 10 and a housing 92. The light source module 10 is positioned inside the housing 92 and radiates light in a lateral direction. The radiated light may be reflected in the emission direction through the inner surface 92A of the housing 92. The light source module 10 includes the lighting device described above. The housing 92 may include a metallic or non-metallic material. The non-metallic material may include a plastic material. The housing 92 may be a reflector of the headlamp. The inner surface 92A of the housing 92 may be a surface coated with a highly reflective material or may include a reflective layer having an anti-reflection (AR) material. For example, the highly reflective material may include at least one metal, such as Al, Ag, or Au. The anti-reflection material may include at least one of MgF2, Al2O3, SiO, SiO2, TiO2+ZrO2, TiO2, or ZrO2. The reflective layer of the inner surface 92A may be a single layer or multiple layers.

The headlamp 90 may include an inner lens and/or an outer lens that project light emitted through the housing 92. The light distribution pattern of light emitted from the light source module 10 may be adjusted depending on the shape of the inner lens or the number of light source portions. The light source module 10 selectively irradiates light in a high beam distribution pattern and a low beam distribution pattern. The high beam distribution pattern or the low beam distribution pattern may be automatically turned on and off depending on the driving mode or driving situation.

The inner surface 92A of the housing 92 may include a partially domed or partially elliptical paraboloid. The inner surface 92A may have a plurality of facets. The facets may be free-form, flat, and/or curved (e.g., concave or convex) members. In some examples, a single facet may have a free-form portion, and/or a flat portion, and/or a curved portion (e.g., any combination thereof). In some embodiments, the facets (or at least the inwardly facing surfaces on the facets) may be at least approximated or otherwise defined by algebraic equations. For example, the shape of the facets or the inwardly facing surfaces may be expressed by one or more fifth-order algebraic equations (although other equations of any order are also possible). In at least one exemplary embodiment, the surface (or, for example, the coating) of the facet has a high reflectivity (e.g., a reflectivity of greater than 80%). Non-limiting examples of the facet and/or the coating on the facet include aluminum and silver, although other reflective materials may be used.

The inner surface 92A of the housing 92 is laterally spaced from the light source module 10, and light emitted from the light source module 10 is reflected by the inner surface 92A and focused toward the exit side of the housing 92, where it may be illuminated as either high beam or low beam. The exterior of the housing 92 may include various features and accessories for mounting or connecting the headlamp 90 to the vehicle interior. Additionally, the exterior of the housing 92 may have an electrical interface, such as a socket, for connecting power and/or signals. The above-described housing 92 and cavity are examples and may be changed into various shapes. The housing 92 according to the embodiment may function as a reflector for the left/right head lamps 90.

The features, structures, and effects described in the embodiments above are included in at least one embodiment of the present invention and are not necessarily limited to a single embodiment. Furthermore, the features, structures, and effects illustrated in each embodiment may be combined or modified in other embodiments by those skilled in the art to which the embodiments pertain. Therefore, such combinations and modifications should be construed as falling within the scope of the present invention. Furthermore, while the embodiments have been described above, they are merely examples and not limitations of the present invention. Those skilled in the art will appreciate that various modifications and applications not illustrated above are possible without departing from the essential characteristics of the embodiments. For example, each component specifically illustrated in the embodiments may be modified and implemented. Furthermore, differences related to such modifications and applications should be construed as falling within the scope of the present invention defined in the appended claims.

## Claims

1. A lighting device comprising:
a heat dissipation plate including a recess portion;
a circuit board disposed in the recess portion and having a pad;
a light source portion disposed on the heat dissipation plate and including a bonding pad and a light emitting device;
a connection member connecting the pad of the circuit board to the bonding pad of the light source portion; and
a sealing portion disposed on the connection member,
wherein the sealing portion including a first sealing portion forming an outer perimeter; and a second sealing portion disposed within the outer perimeter, and
wherein the first sealing portion and the second sealing portion comprise the same resin composition.

2. The lighting device of claim 1,
wherein the resin composition comprises a base resin and a filler,
wherein the base resin comprises an oligomer, a monomer, and a photo-initiator,
wherein the oligomer is comprised in an amount of 45 wt% to 65 wt% based on a total weight of the resin composition,
wherein the monomer is comprised in an amount of 30 wt% to 50 wt% based on the total weight of the resin composition,
wherein the photo-initiator is comprised in an amount of 1 wt% to 5 wt% based on the total weight of the resin composition, and
wherein the filler is comprised in an amount of 2 wt% to 10 wt% based on the total weight of the resin composition.

3. The lighting device of claim 1,
wherein a modulus of the resin composition after curing is 100 MPa to 8000 MPa.

4. The lighting device of claim 3,
wherein a thixotropic property of the resin composition before curing is 2 to 4.

5. The lighting device of claim 2,
wherein a particle diameter of the filler is 5 µm to 30 µm.

6. The lighting device of claim 1,
wherein the connection member comprises:
one end connected to the bonding pad of the light source portion;
the other end connected to the pad of the circuit board; and
a center portion extending from the one end toward the other end,
wherein the first sealing portion comprises a 1-1 sealing portion positioned close to the one end, a 1-2 sealing portion positioned close to the other end, and a 1-3 sealing portion connecting the 1-1 sealing portion and the 1-2 sealing portion, and
wherein the 1-1 sealing portion, the 1-2 sealing portion, and the 1-3 sealing portion are formed integrally.

7. The lighting device of claim 6,
wherein a maximum height of the second sealing portion is greater than 1 to 5 times a maximum height of the first sealing portion.

8. The lighting device of claim 6,
wherein a maximum height of the 1-2 sealing portion is greater than or equal to a maximum height of the 1-1 sealing portion.

9. The lighting device of claim 8,
wherein the maximum height of the 1-2 sealing portion is 1 to 2.5 times the maximum height of the 1-1 sealing portion.

10. The lighting device of claim 6,
wherein the second sealing portion and the connection member are spaced apart by a first distance,
wherein the first distance is defined as the distance between a maximum height of the connection member and the second sealing portion,
wherein the first distance is 100 µm to 200 µm.

11. The lighting device of claim 6,
wherein the 1-1 sealing portion and the light emitting device are spaced apart by a second distance,
wherein the second distance is 0.8 mm to 1 mm.

12. The lighting device of claim 1,
wherein light emitted from the light emitting device and the first sealing portion form a first angle,
wherein light emitted from the light emitting device and the second sealing portion form a second angle, and
wherein at least one of the first angle and the second angle is 30° or less.

13. The lighting device of claim 1,
wherein the connection member comprises:
one end connected to the bonding pad of the light source portion;
the other end connected to the pad of the circuit board; and
a center portion extending from the one end toward the other end,
wherein the first sealing portion includes a 1-1 sealing portion arranged close to the one end, a 1-2 sealing portion arranged close to the other end, and a 1-3 sealing portion connecting the 1-1 sealing portion and the 1-2 sealing portion,
wherein the 1-1 sealing portion includes a 1-1a sealing portion and a 1-1b sealing portion,
wherein the 1-1a sealing portion is disposed closer to the one end than the 1-1b sealing portion,
wherein the 1-2 sealing portion includes a 1-2a sealing portion and a 1-2b sealing portion,
wherein the 1-2a sealing portion is disposed closer to the other end than the 1-2b sealing portion, and
wherein the 1-1 sealing portion includes a 1-3a sealing portion and a 1-3b sealing portion.

14. The lighting device of claim 13,
wherein the 1-1a sealing portion, the 1-2a sealing portion, and the 1-3a sealing portion form a first outer perimeter portion;
wherein the 1-1b sealing portion, the 1-2b sealing portion, and the 1-3b sealing portion form a second outer perimeter portion; and
wherein the first outer perimeter and the second outer perimeter are spaced apart from each other.

15. The lighting device of claim 14,
wherein the second sealing portion is positioned within the first outer perimeter.

16. The lighting device of claim 14,
wherein a height of the first outer perimeter is greater than or equal to a height of the second outer perimeter.

17. A headlamp comprising:
a housing; and
a light source module disposed within the housing,
wherein the light source module comprises a lighting device of any one of claims 1 to 16.
